# FASCICULE DE BREVET EUROPEEN

(11) **EP 2 901 542 B1**
(45) Date de publication et mention de la délivrance du brevet: **29.03.2023**
(21) Numéro de dépôt: 13795814.6
(22) Date de dépôt: 27.08.2013
(51) Int. Cl.: H02K 3/52, H02K 29/08, H02K 5/22

(54) **ENSEMBLE DE CONNEXION ELECTRIQUE POUR UN MOTEUR SANS BALAI ET SYSTEME COMPRENANT UN TEL ENSEMBLE**
ELEKTRISCHE VERBINDUNGSANORDNUNG FÜR EINEN BÜRSTENLOSEN MOTOR UND SYSTEM MIT DERARTIGER ANORDNUNG
ELECTRIC CONNECTION ASSEMBLY FOR A BRUSHLESS MOTOR AND SYSTEM COMPRISING SUCH AN ASSEMBLY

(30) Priorité: 26.09.2012 FR 1259035
(43) Date de publication de la demande: 05.08.2015
(73) Titulaire: Sonceboz Automative SA, 2605 Sonceboz (CH)
(72) Inventeur: ANDRIEUX, Gaël, 2533 Evilard (CH)
(74) Mandataire: IP Trust
(86) Numéro de dépôt international: PCT/FR2013/051971
(87) Numéro de publication internationale: WO 2014/049218

(56) Documents cités:
- EP-A1- 1 727 261
- EP-A2- 1 677 404
- WO-A1-03/001647
- DE-U1-202009 000 415
- US-A1- 2007 278 875
- US-A1- 2010 052 461
- US-B2- 6 914 356

## Description

### Domaine de l'invention

La présente invention concerne le domaine des moteurs électromagnétiques sans balai et plus spécialement des moyens de connexion électriques de ces moteurs.

L'invention se destine plus particulièrement à des moteurs présentant une grande compacité en épaisseur, c'est à dire lorsque le ratio du diamètre sur la hauteur doit être optimisé (typiquement section inférieure à 50 mm).

Les moteurs électromagnétiques sans balai présentent un ensemble de bobines d'excitation électrique généralement configurées pour réaliser une alimentation polyphasée. Dans le cas de moteurs triphasés, il y a donc 3X bobines à connecter, si X est le nombre de bobines par phase, reliées en série ou en parallèle, en configuration étoile ou triangle.

### Etat de la technique

On connaît dans l'art antérieur des solutions pour d'une part connecter les bobines entre elles et d'autre part pour sortir les 3 connexions nécessaires à l'alimentation des 3 phases. Par exemple, le brevet EP1677404 divulgue un moteur de petite taille pour la direction assistée électrique, dans lequel le cadre de la bobine peut être facilement réalisé avec un gain de place.

Des bobines de stator multi-phase montées dans un noyau de stator sont reliés par phase en reliant des anneaux aux extrémités de bobine des bobines de stator.

Une barre de bus (BB) alimenté en énergie électrique à partir de l'extérieur est empilé sur les anneaux de liaison (CR) dans la direction axiale du moteur et est relié électriquement à des anneaux de liaison (CR).

Ce document de l'art antérieur ne divulgue pas de corps de bobine présentant deux encoches de connexion. Il ne présente pas de pistes de sortie coplanaires permettant de réaliser la connexion simple et directe avec les bobines.

Au paragraphe [0102] de ce document, on relève qu'il est prévu un « bus bar » qui est connecté sur des « connecting rings » qui elles même sont connectées aux bobines portées par des corps (qui ne semblent pas référencées dans D1 mais qui sont clairement visibles).

La présente invention concerne une solution de connectique où les pistes de sortie sont directement connectées aux bobines à travers le corps de bobine et ces pistes sont indexées par rapport à ces dits corps. Ainsi, ce document propose une solution qui présente au moins une pièce supplémentaire.

Le corps de bobine n'est pas utilisé dans l'art antérieur puisque l'on utilise des « connectings rings » qui viennent crocheter les connexions bobine.

Chacune des demandes de brevet US2007/278875 et US2010/052461 décrit un système de connexion se composant d'une bobine, d'un corps de bobine, d'un premier « conductor plate » et d'un second « conductor plate » qui fait office de sortie.

Il nécessite donc un nombre important de pièces.

De plus, l'extrémité de la piste de sortie n'est pas repliée de manière à réaliser une connexion axiale puisque c'est le fil qui sort axialement de manière à réaliser une connexion perpendiculairement (voir Fig 2 de D2, éléments 24b qui pince le fil que l'on voit sortir axialement). Ce document va à l'encontre de la notion de planéité et simplicité qui sont recherchés par la présente invention.

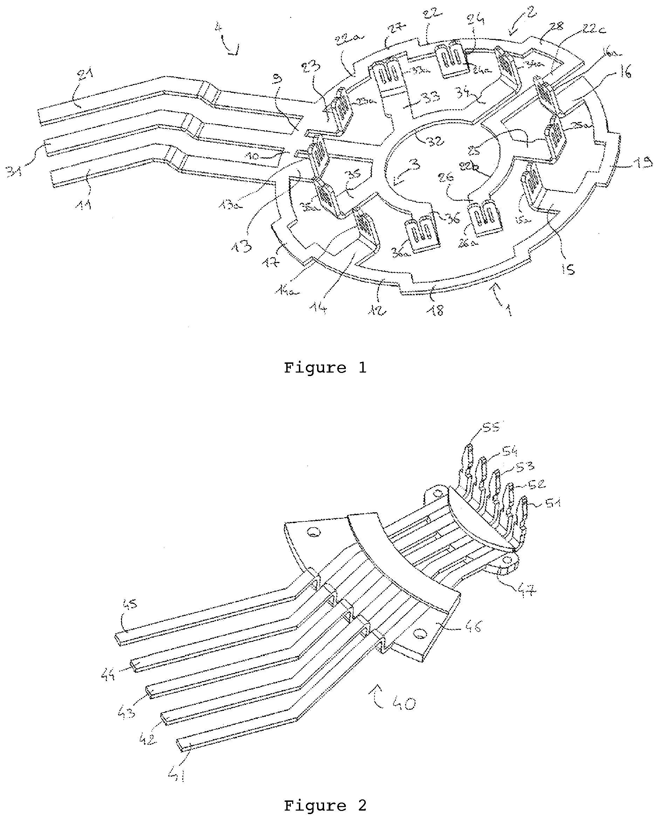

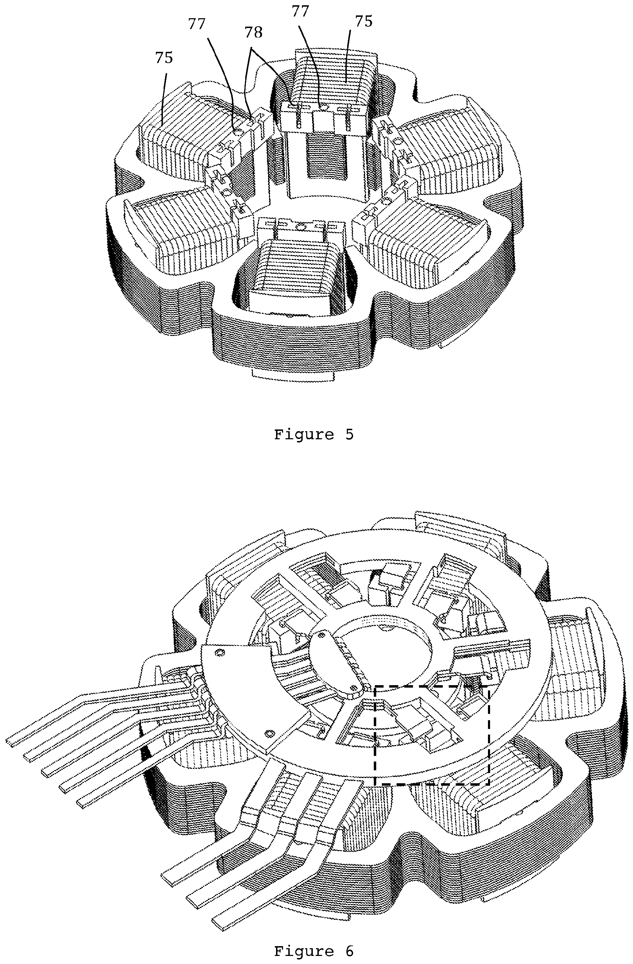

Le brevet DE20200900415 n'est pas non plus pertinent : Comme on peut l'apprécier en figure 6 de D3, il existe un « insulating ring » (42), servant de corps de bobine, qui reçoit les « bus bar » (44, 46, 48). Les fils de bobine sont alors crochetés aux « hook » (92W, 94W...) comme on le voit en figure 1.

Il n'y a donc aucune présence d'un corps de bobine qui présente une forme d'encoche complémentaire à celle de la piste de sortie. Il n'y a pas non plus, dans ce document, l'idée de réaliser des sorties coplanaires. La solution proposée n'apporte pas ses avantages de connectique simplifiée et nombre de pièces limité.

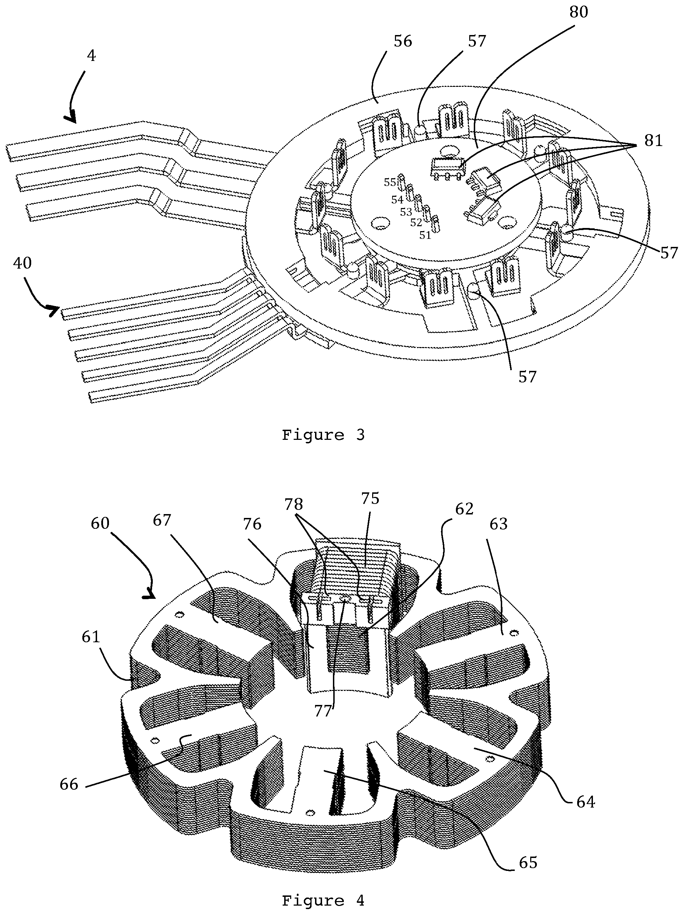

Concernant le document EP1727261, on voit clairement en figures 4, 7 ,17 que les pistes de sortie ne sont pas coplanaires. C'est une première différence notable. Ensuite, si l'on analyse la figure 6, on voit (et lit en [0020]) que les corps de bobine (« insulation ends » 10) présentent une « receiving chamber » (38) destinée à accueillir l'Insulation Displacement Contact (40) qui est donc la pièce servant à dénuder le fil. La connectique de sortie est réalisée axialement par le « terminal contact » (50) qui vient dans le « bridge-like » portion (16a).

C'est l'inverse dans la présente, puisque le fil n'est pas dénudé dans les corps de bobine mais c'est la piste de sortie qui, par sa terminaison de type IDC intégrée réalise le dénudé du fil. Voir particulièrement la figure 1 de notre demande avec les terminaisons auto-dénudant (13 à 16). On ne retrouve donc pas dans D4 les éléments de notre revendication et le but de simplicité et de coplanarité n'est pas recherché.

Le brevet US6914356 décrit une solution pour connecter des pistes lorsqu'il y a plusieurs fils. On semble s'éloigner ici de l'objet la présente invention. On n'y retrouve pas de corps de bobine présentant une forme complémentaire dans laquelle viennent se positionner les pistes de sortie. Il n'y a pas idée d'une sortie coplanaire...

Le brevet WO03/001647 propose un ensemble de pistes coplanaires (bien que la sortie soit axiale) mais la notion d'encoche dans les corps de bobines avec connexion directe n'est pas présente. On ne retrouve pas cette notion « la forme de ladite extrémité 15 repliées (13a, 14a, 15a, 16a) étant complémentaire à la forme de l'encoche (78) de connexion ».

### Inconvénients des solutions de l'art antérieur

Les solutions de l'art antérieur présentent un encombrement important, notamment dans la direction axiale, qui ne permet pas de réaliser des moteurs ultraplats de type « galette » et plus généralement qui augmentent le volume occupé par le moteur.

Lorsque l'encombrement est contraint par un espace disponible restreint, l'espace occupé par le connecteur réduit le volume disponible pour le rotor et le stator, et donc au détriment de la puissance et des qualités électromécaniques du moteur ou de l'actionneur.

### Solution apportée par l'invention

La présente invention a pour but de répondre aux problèmes soulevés ci-dessus en proposant une solution de connectique avantageuse permettant de ramener les 3 phases électriques d'un moteur à X bobines par phase, connectées en série ou parallèle et en triangle ou étoile, à un connecteur ayant 3 cosses, avec un nombre limité de pièces et un encombrement très réduit, tant dans la direction axiale que dans la dimension transversale.

A cet effet, l'invention concerne selon son acception la plus générale un système comprenant d'une part un moteur électrique sans balai et d'autre part un ensemble de connexion complémentaire, ledit moteur électromagnétique sans balai comprenant un ensemble statorique bobiné à P phases électriques et X bobines (75) par phase, chaque bobine (75) étant portée par un corps (76) muni de deux encoches (78) de connexion, ledit ensemble de connections étant constitué par un premier sous-ensemble (4) formé de W pistes (1,2, 3) découpées dans une seule feuille conductrice et étant essentiellement coplanaire, - hormis éventuellement les prolongements de liaison (11, 21, 31) - présentant des prolongements de liaison (11, 21, 31) parallèles entre eux et constituant les pattes de raccordement permettant d'établir un contact électrique avec un connecteur pour l'alimentation des bobines (75), W étant un nombre entier compris entre P et P+1, chacune desdites W pistes (1,2,3) se terminant par au moins une extrémité repliée (13a,14a,15a,16a, 23a, 24a, 25a, 26a, 33a, 34a, 35a, 36a) perpendiculairement au plan desdites pistes (1,2,3), la forme de ladite extrémité repliées (13a, 14a, 15a,16a) étant complémentaire à la forme de l'encoche (78) de connexion, lesdites pistes (1, 2, 3) étant réunies par une matière plastique isolante.

Avantageusement, les dites pistes sont maintenues par le surmoulage d'une matière plastique isolante.

L'invention a aussi pour but de proposer une solution de connexion d'un ensemble de Y signaux (par exemple ceux de sondes de Hall) appartenant à un codeur servant à détecter la position au rotor dudit moteur depuis un circuit imprimé vers ce même connecteur. À cet effet, le codeur se présente avantageusement sous la forme d'au moins une piste circulaire aimantée liée au rotor et présentant des alternances de pôles magnétiques Nord-Sud associée à au moins deux sondes de Hall, positionnées sur un circuit imprimé au voisinage axial direct de la piste aimantée et détectant l'évolution de l'induction magnétique générée par la piste aimantée. La gestion électrique (alimentation et lecture des signaux) des sondes de Hall est réalisée par un ensemble de Y fiches qui partent du circuit imprimé et sont sorties, hors du moteur et latéralement, vers un connecteur.

Selon ce mode de réalisation particulier, l'ensemble de connexion selon l'invention comporte en outre un sous-ensemble de pistes de connexion pour le raccordement à au moins un capteur de position.

Avantageusement, les pistes extérieures présentent des décrochements pour permettre l'optimisation du découpage dans une seule feuille métallique.

Selon un mode de mise en oeuvre préféré, ledit sous-ensemble de pistes de connexion pour le raccordement à au moins un capteur de position est co-moulé lors du surmoulage des pistes de connexion des bobines.

Selon un mode de réalisation particulier, les surfaces des encoches de connexion perpendiculaires à la direction d'insertion de l'extrémité repliée présentent des poches complémentaires à des excroissances présentes sur le surmoulage, entourant l'extrémité repliée correspondante.

### Description détaillée d'un exemple non limitatif de réalisation

L'invention sera mieux comprise à la lecture de la description qui suit, faisant référence aux dessins annexés où :
- la figure 1 représente un premier sous-ensemble de connexion des bobines, pour former un connecteur conforme à la présente invention,
- la figure 2 représente un deuxième sous-ensemble de connexion des capteurs, pour former un connecteur conforme à la présente invention,
- la figure 3 représente un connecteur conforme à la présente invention,
- la figure 4 représente une vue isolée de l'ensemble statorique avec une seule bobine,
- la figure 5 représente une vue isolée de l'ensemble statorique complet bobiné,
- la figure 6 présente une vue du stator et de l'ensemble de connexion,
- la figure 7 présente une vue de détail de la figure 6,
- la figure 8 présente l'ensemble de connexion et moteur surmoulé.

La figure 1 représente le premier sous-ensemble de connexion (4) pour la réalisation d'un ensemble de connectique revendiqué par le présent brevet. Cette figure 1 et la description qui en est faite est relative à un mode de connexion de type « triangle » destiné à un ensemble de 6 bobines électrique formant 3 phases électriques par la connexion en parallèle des bobines deux à deux. La description du sous-ensemble de connexion (4) qui est faite ci-dessous se réfère donc à cette connexion « triangle/parallèle » précise mais l'homme de métier sera à même d'adapter les enseignements ci-dessous à tout type de connexion bien connue (triangle ou étoile et connexion série ou parallèle des bobines comme par exemple décrit dans le brevet FR2923951) sans sortir du cadre de l'invention.

Le premier sous-ensemble (4) est formé de trois pistes (1 à 3) découpés dans une feuille d'un matériau conducteur, de préférence amagnétique, tel que du laiton, par exemple un alliage Cuivre-Zinc de type CuZn30 qui se compose de 70% de cuivre et de 30% de zinc.

La découpe peut être réalisée par estampage, par jet d'eau pure ou chargée de silice, par laser ou tout autre technique connue de l'homme du métier.

Les trois pistes (1 à 3) sont essentiellement coplanaires (hormis éventuellement les prolongements de liaison (11, 21, 31)), et présentent des prolongements de liaison parallèles entre eux (11, 21, 31) s'étendant parallèlement à un prolongement de liaison médian (31). Ces prolongements de liaison (11, 21, 31) constituent les pattes de raccordement permettant d'établir un contact électrique avec un connecteur pour l'alimentation des bobines (non montrés ici).

Chaque piste (1 à 3) est reliée à quatre bobines pour former deux à deux une phase d'alimentation électrique, selon une configuration connue dans l'état de la technique.

La première piste (1) présente une partie arquée (12) s'étendant sur environ 220°, terminée par un prolongement de liaison (11). La partie arquée (12) est prolongée dans sa partie intérieure par quatre épanouissements radiaux (13 à 16) dirigés vers le centre de courbure de la partie arquée (12).

Chacun de ces épanouissements radiaux (13 à 16) se termine par une extrémité auto-dénudant repliée à 90° (13a à 16a) permettant d'assurer la connexion sur les fils des bobines par une connexion de type auto-dénudant (IDC, en anglais, pour *Insulation Displacement Contact*).

Le positionnement angulaire de ces épanouissements radiaux (13 à 16) et des extrémités repliées correspondantes (13a à 16a) est déterminé en fonction de la position des fils de raccordement des bobines du stator.

La partie arquée (12) présente une épaisseur radiale sensiblement constante. Toutefois, elle présente des décrochements (17 à 19) afin de permettre de découper dans une même feuille les trois pistes (1, 2, 3) en réduisant la perte de matière. La profondeur de ces décrochements (17 à 19) et leur extension angulaire est fixé afin de permettre le découpage de des épanouissements radiaux des pistes complémentaires (2, 3).

La deuxième piste (2) présente une partie arquée (22) s'étendant sur environ 220°, terminée par un prolongement de liaison (21). La partie arquée (22) est prolongée par quatre épanouissements radiaux (23 à 26) dirigés vers le centre de courbure de la partie arquée (22). La partie arquée (22) est disposée de manière sensiblement symétrique à la première partie arquée (12), par rapport à un axe médian passant par le prolongement de liaison centrale (31).

Chacun de ces épanouissements radiaux (23 à 26) se termine par une extrémité auto-dénudant repliée à 90° (23a à 26a) permettant d'assurer la connexion sur les fils des bobines par une connexion de type auto-dénudant (IDC, en anglais, pour *Insulation Displacement Contact*). Chacune des extrémités présentent un plan médian perpendiculaire à un axe radial passant par le centre de l'épanouissement.

La partie arquée (22) présente un premier tronçon (22a) présentant le même rayon que la partie arquée (12) de la première piste (1). Ce premier tronçon (22a) s'étend sur environ 120° et se prolonge ensuite par un deuxième tronçon (22b) s'étendant sur environ 100°, avec un rayon inférieur. Les deux tronçons (22a, 22b) sont reliés par un tronçon radial (22c) .

La partie arquée (22) présente une épaisseur radiale sensiblement constante. Toutefois, elle présente des décrochements (27, 28) afin de permettre de découper dans une même feuille les trois pistes, en réduisant la perte de matière. La profondeur de ces décrochements (27, 28) et leur extension angulaire est fixé afin de permettre le découpage de des épanouissements radiaux des pistes complémentaires (2, 3).

La troisième piste (3) présente une partie arquée (32) s'étendant sur environ 220°, terminée par un prolongement de liaison (31). La partie arquée (32) présente un rayon sensiblement identique au rayon du deuxième tronçon (22b) de la deuxième piste (2).

La partie arquée (32) est prolongée par quatre épanouissements radiaux (33 à 36) dirigés en direction opposée au centre de la courbure de la partie arquée (32).

Chacun de ces épanouissements radiaux (33 à 36) se termine par une extrémité auto-dénudant repliée à 90° (33a à 36a) permettant d'assurer la connexion sur les fils des bobines par une connexion de type auto-dénudant (IDC, en anglais, pour *Insulation Displacement Contact*).

Les pistes sont ainsi découpées dans une seule feuille comme en témoigne les ponts (9, 10) visibles sur cette figure mais qui sont coupés après réalisation du sous-ensemble (4) pour isoler les pistes les unes des autres.

La figure 2 présente un deuxième sous-ensemble (40) pour la connexion d'un codeur de position, par exemple mettant en oeuvre des sondes de Hall.

Il est constitué par un faisceau de cinq pistes conductrices (41 à 45) convergeant et supportés par deux platines isolantes (46, 47).

Ces pistes (41 à 45) sont destinées à être connectées à un circuit extérieur gérant l'alimentation et la lecture des signaux qui passent par ces pistes (41 à 45), en l'occurrence les signaux d'un codeur de la position, sous forme par exemple de sondes de Hall. Par exemple, avec trois sondes de Hall, les cinq pistes (41 à 45) permettent la connexion d'une masse (commune), d'une alimentation (commune) et de trois signaux de sondes (soit donc bien cinq connexion nécessaires).

L'extrémité de chacune des pistes (41 à 45) s'étend perpendiculairement par un moyen de connexion, par exemple avec une extrémité (51 à 55) présentant un « chas d'aiguille » de type Press-Fit (nom commercial).

Les deux ensembles (4, 40) sont surmoulés pour former un connecteur permettant d'assurer la liaison à la fois mécanique et électrique, par un système représenté en figure 3. Le surmoulage (56) maintient ensemble les deux sous-ensembles (4, 40). Un des objets de l'invention est aussi de permettre de rendre possible différentes indexation angulaire des deux sous-ensembles (4, 40) en fonction de la position relative des connecteurs de sortie -non montrés- (pour l'alimentation des bobines d'une part et la gestion des sondes de Hall d'autre part).

Le surmoulage (56) présente des excroissances (57), sous une forme de pion non limitative, destinées à permettre l'indexation de l'ensemble surmoulé sur le stator (60) bobiné. Le deuxième sous-ensemble (40) est solidaire sur son extrémité intérieur à un circuit imprimé (80) par une fixation de type Press-fit ou par soudure des extrémités (51 à 56). Le circuit imprimé (80) porte par ailleurs les sondes de Hall (81) destinées à détecter la position du rotor du moteur (non montré).

Le stator (60) représenté en figure 4 est constitué par un empilement de tôles en fer doux (61) et présentant six dents larges (62 à 67) radiales destinées à recevoir des bobines électriques. Une seule bobine est montrée ici par souci de clarté. Le stator (60) présente aussi des dents intercalaires plus étroites que les dents larges (62 à 67). Toutes les dents s'étendent radialement par rapport à une couronne périphérique. Ce stator (60) est conforme à celui présenté dans le brevet FR2899396 mais n'est nullement limitatif dans le cadre de la présente invention qui se destine de façon générale à permettre la connexion de tout type de topologies de moteurs sans balai dont les dents s'étendent radialement.

Chaque dent large (62 à 67) porte une bobine (75) qui est installée sur un corps de bobine (76). Ces corps de bobines (76) présentent d'une part des poches (77) destinées à permettre l'indexation des sous-ensembles (4, 40) surmoulés sur le stator (60) bobiné et d'autre part des encoches (78) destinées à permettre la connexion électrique. Dans ces encoches (78) sont positionnés la terminaison d'un fil électrique isolé qui sera connecté grâce aux extrémités repliées auto-dénudant des pistes (1, 2, 3). Ces encoches présentent une poche d'introduction s'ouvrant sur une cavité sensiblement rectangulaire présentant deux grandes faces longitudinales parallèles à un plan longitudinal médian. Ce plan longitudinal médian et les deux grandes faces sont perpendiculaires à un axe radial.

Les poches (77) peuvent présenter des formes et localisation diverses sur les corps de bobines (76) mais doivent être de formes complémentaires avec les excroissances (57) présentes sur le surmoulage (56). Avantageusement les poches (77) peuvent être chanfreinées pour accepter une tolérance dans le montage du surmoulage (56) sur les corps de bobine (76).

La figure 5 présente l'ensemble du stator (60) bobiné où chaque dent large porte une bobine électrique enroulée autour d'un corps de bobine qui présente des poches et encoches destinées à accueillir les sous-ensembles (4, 40) pour l'indexation mécanique et la connexion électrique.

Le premier sous-ensemble de connexion (4) est appliqué sur la face frontale du stator (60) pour assurer la connexion mécanique de l'ensemble via l'indexation du surmoulage (56) avec les poches (62c à 67c), comme représenté en figure 6. Cette indexation tolérante permet de bien positionner les extrémités repliées (13a à 16a, 23a à 26a et 33a à 36a) auto-dénudant du premier sous-ensemble (4) et permettre la connexion électrique à l'intérieur des encoches (78) des corps de bobine (76).

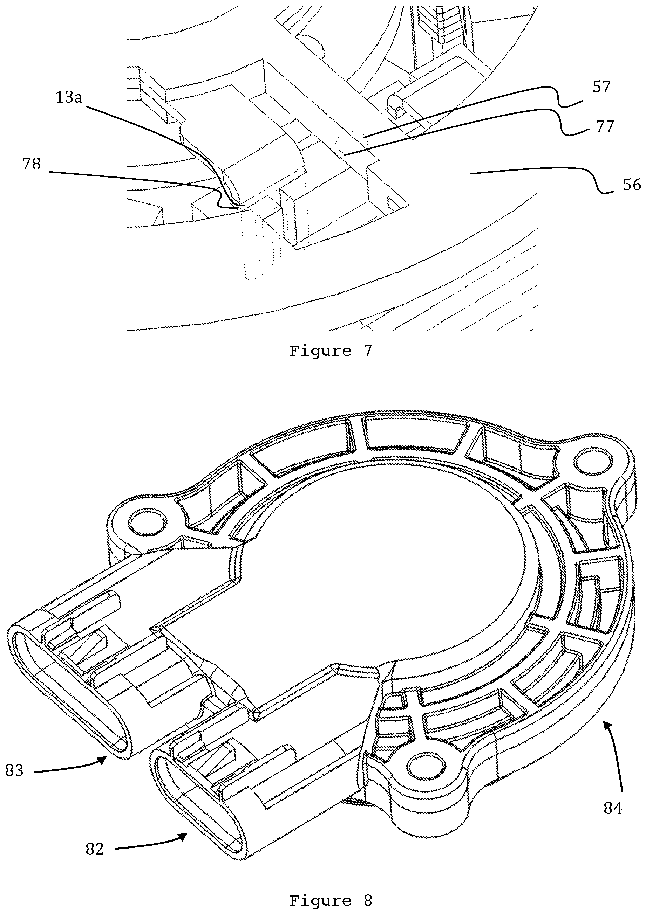

La figure 7 présente une vue de détail de la figure 7 (selon le cadre pointillé de la figure 6) où l'on apprécie mieux la connexion électrique qui est faite grâce à l'extrémité repliée (13a) dans l'encoche (78) permise grâce à l'indexation mécanique du surmoulage (56) à l'aide de l'excroissance (57) qui vient dans la poche (77).

La figure 8 présente l'ensemble de connexion après surmoulage (84) de l'ensemble où les deux sous-ensembles (4,40) permettent la connexion électrique des bobines du moteur et du capteur de position par les deux connecteurs femelles du moteur (82) et du capteur (83) complémentaires aux connecteurs mâles (non montrés) dans l'application.

Le produit ainsi formé permet des connexions électriques sûres et avec un minimum de pièces dans un encombrement axial limité.

## Revendications

1. - Système comprenant d'une part un moteur électrique sans balai et d'autre part un ensemble de connexion complémentaire, ledit moteur électromagnétique sans balai comprenant un ensemble statorique (60) bobiné à P phases électriques et X bobines (75) par phase, chaque bobine (75) étant portée par un corps (76) muni de deux encoches (78) de connexion, **caractérisé en ce que** ledit ensemble de connections étant constitué par un premier sous-ensemble (4) formé de W pistes (1, 2, 3) découpées dans une seule feuille conductrice et étant essentiellement coplanaire, - hormis éventuellement les prolongements de liaison (11, 21, 31) - présentant des prolongements de liaison (11, 21, 31) parallèles entre eux et constituant les pattes de raccordement permettant d'établir un contact électrique avec un connecteur pour l'alimentation des bobines (75), W étant un nombre entier compris entre P et P+1, chacune desdites W pistes (1,2,3) se terminant par au moins une extrémité repliée (13a,14a,15a,16a, 23a, 24a, 25a, 26a, 33a, 34a, 35a, 36a) perpendiculairement au plan desdites pistes (1,2,3), la forme de ladite extrémité repliées (13a, 14a, 15a, 16a) étant complémentaire à la forme de l'encoche (78) de connexion, lesdites pistes (1, 2, 3) étant réunies par une matière plastique isolante.

2. - Système selon la revendication 1, **caractérisé en ce que** lesdites pistes (1,2,3) sont maintenues par le surmoulage d'une matière plastique isolante.

3. - Système selon la revendication 2, **caractérisé en ce qu'**il comporte en outre un deuxième sous-ensemble (40) de pistes (41,42,43,44,45) conductrices pour le raccordement à au moins un capteur de position.

4. - Système selon la revendication précédente, **caractérisé en ce que** le deuxième sous-ensemble (40) est co-moulé lors du surmoulage des pistes (1,2,3) de connexion des bobines.

5. - Système selon l'une des revendications 2 à 4 en ce que les pistes (1,2,3) ont une forme circulaire et qu'il existe des décrochements (17,18,19,27,28) sur les pistes extérieures pour permettre le découpage dans une seule feuille.

6. - Système selon la revendication précédente **caractérisée en ce que** le surmoulage (56) des pistes (1,2,3) de connexion présente des excroissances (57).

7. - Système selon la revendication précédente **caractérisée en ce que** les surfaces des encoches (78) de connexion perpendiculaire à la direction d'insertion de l'extrémité repliée (13a,14a,15a,16a) présentent des poches (77) complémentaires aux excroissances (57) du surmoulage (56) entourant ladite extrémité repliée (13a,14a,15a,16a) correspondante.

## Patentansprüche

1. System, umfassend einerseits einen bürstenlosen Elektromotor und andererseits eine komplementäre Verbindungsanordnung, wobei der bürstenlose elektromagnetische Motor eine Statoranordnung (60) umfasst, die mit P elektrischen Phasen und X Spulen (75) pro Phase gewickelt ist, wobei jede Spule (75) von einem Körper (76) getragen wird, der mit zwei Verbindungskerben (78) versehen ist, **dadurch gekennzeichnet, dass** die genannte Verbindungsanordnung aus einer ersten Unteranordnung (4) besteht, die aus W Bahnen (1, 2, 3) gebildet wird, die aus einer einzigen leitenden Folie ausgeschnitten werden und die - abgesehen von etwaigen Verbindungsverlängerungen (11, 21, 31) - im Wesentlichen koplanar sind und die zueinander parallele Verbindungsverlängerungen (11, 21, 31) aufweisen und die Anschlusslaschen bilden, die es ermöglichen, einen elektrischen Kontakt mit einem Verbinder zur Versorgung der Spulen (75) herzustellen, wobei W eine ganze Zahl zwischen P und P+1 ist, wobei jede der W Bahnen (1, 2, 3) in mindestens einem umgebogenen Ende (13a, 14a, 15a, 16a, 23a, 24a, 25a, 26a, 33a, 34a, 35a, 36a) senkrecht zur Ebene der Bahnen (1, 2, 3) endet, wobei die Form des umgebogenen Endes (13a, 14a, 15a, 16a) komplementär zur Form der Verbindungskerbe (78) ist, wobei die Bahnen (1, 2, 3) durch ein isolierendes Kunststoffmaterial zusammengefügt sind.

2. System nach Anspruch 1, **dadurch gekennzeichnet, dass** die Bahnen (1, 2, 3) durch Überformung mit einem isolierenden Kunststoffmaterial zusammengehalten werden.

3. System nach Anspruch 2, **dadurch gekennzeichnet, dass** es außerdem eine zweite Unteranordnung (40) von Leiterbahnen (41, 42, 43, 44, 45) zum Anschluss an mindestens einen Positionssensor enthält.

4. System nach dem vorhergehenden Anspruch, **dadurch gekennzeichnet, dass** die zweite Unteranordnung (40) bei der Überformung der Bahnen (1, 2, 3) zur Verbindung der Spulen mitverformt wird.

5. System nach einem der Ansprüche 2 bis 4, **dadurch gekennzeichnet, dass** die Bahnen (1, 2, 3) eine kreisförmige Form aufweisen und dass an den äußeren Bahnen Absätze (17, 18, 19, 27, 28) vorhanden sind, um das Ausschneiden aus einer einzigen Folie zu ermöglichen.

6. System nach dem vorhergehenden Anspruch, **dadurch gekennzeichnet, dass** die Überformung (56) der verbindenden Bahnen (1, 2, 3) Vorsprünge (57) aufweist.

7. System nach dem vorhergehenden Anspruch, **dadurch gekennzeichnet, dass** die Oberflächen der Verbindungskerben (78) senkrecht zur Einführrichtung des umgebogenen Endes (13a, 14a, 15a, 16a) Taschen (77) aufweisen, die zu den Vorsprüngen (57) der das umgebogene Ende (13a, 14a, 15a, 16a) umgebenden Überformung (56) komplementär sind.

## Claims

1. System, comprising a brushless electric motor and a complementary connection assembly, said brushless electromagnetic motor comprising a stator assembly (60) wound with P electrical phases and X coils (75) per phase, each coil (75) being carried by a body (76) provided with two connection notches (78), **characterized in that** said connection assembly is constituted by a first sub-assembly (4) formed by W tracks (1, 2, 3) which are cut from a single conductive sheet and are substantially coplanar, optionally apart from the connecting extensions (11, 21, 31), having connecting extensions (11, 21, 31) which are parallel to one another and constitute the attachment lugs making it possible for electrical contact to be made with a connector for powering the coils (75), W being an integer between P and P+1, each of said W tracks (1, 2, 3) terminating in at least one folded end (13a, 14a, 15a, 16a, 23a, 24a, 25a, 26a, 33a, 34a, 35a, 36a) perpendicularly to the plane of said tracks (1, 2, 3), the shape of said folded end (13a, 14a, 15a, 16a) being complementary to the shape of the connection notch (78), said tracks (1, 2, 3) being joined by an insulating plastics material.

2. System according to claim 1, **characterized in that** said tracks (1, 2, 3) are held by the molding of an insulating plastics material.

3. System according to claim 2, **characterized in that** it further comprises a second sub-assembly (40) of conductive tracks (41, 42, 43, 44, 45) for connection to at least one position sensor.

4. System according to the preceding claim, **characterized in that** the second sub-assembly (40) is co-molded during the molding of the tracks (1, 2, 3) for connecting the coils.

5. System according to any of claims 2 to 4, **characterized in that** the tracks (1, 2, 3) have a circular shape and **in that** there are recessed parts (17, 18, 19, 27, 28) on the outer tracks to allow cutting in a single sheet.

6. System according to the preceding claim, **characterized in that** the molding (56) of the connection tracks (1, 2, 3) has projections (57).

7. System according to the preceding claim, **characterized in that** the surfaces of the notches (78) for connection perpendicular to the direction of insertion of the folded end (13a, 14a, 15a, 16a) have pockets (77) which are complementary to the projections (57) of the molding (56) surrounding said corresponding folded end (13a, 14a, 15a, 16a).
